(19)

**Europäisches Patentamt**

**European Patent Office**

**Office européen des brevets**

(11) **EP 4 686 745 A1**

(12) **EUROPEAN PATENT APPLICATION**

(43) Date of publication:
**04.02.2026 Bulletin 2026/06**

(21) Application number: **24382839.9**

(22) Date of filing: **30.07.2024**

(51) International Patent Classification (IPC):
*C09K 11/02* (2006.01)　　*C09K 11/66* (2006.01)

(52) Cooperative Patent Classification (CPC):
**C09K 11/02; C09K 11/665**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Universidad Autónoma de Madrid**
  **28049 Madrid (ES)**
• **Consejo Superior de Investigaciones Cientificas**
  **28006 Madrid (ES)**
• **Universidad de Sevilla**
  **41013 Sevilla (ES)**

(72) Inventors:
• **Zarzuela, Marta**
  **Madrid (ES)**
• **Anaya, Miguel**
  **Sevilla (ES)**
• **Carretero, Sol**
  **Madrid (ES)**
• **Quintanilla, Marta**
  **Madrid (ES)**

(74) Representative: **Pons IP**
**Glorieta Rubén Darío 4**
**28010 Madrid (ES)**

(54) **HALIDE PEROVSKITE NANOCRYSTALS STABILIZED IN A POLAR MEDIA AND ITS METHOD FOR OBTAINMENT**

(57)　　The invention relates to a novel approach to tackle the instability issue by encapsulating perovskites ($ABX_3$ wherein X is Cl, Br, I or any combination thereof) nanocrystals within micelles. This pioneering technique allows for the synthesis of perovskite nanocrystals using the preferred synthesis method, followed by a streamlined single-step process wherein a protective micelle forms on the nanocrystal surface. The significance of said novel approach lies in its ability to enhance the stability of perovskite nanocrystals specifically in polar solvents, such as ethanol and 2-propanol, without the need for intricate synthesis procedures.

EP 4 686 745 A1

**Description**

The invention relates to a novel approach to tackle the instability issue by encapsulating halide perovskites ($ABX_3$ wherein X is Cl, Br, I or any combination thereof) nanocrystals within micelles. This pioneering technique allows for the synthesis of halide perovskite nanocrystals using the preferred synthesis method, followed by a streamlined single-step process wherein a protective micelle forms on the nanocrystal surface. The significance of said novel approach lies in its ability to enhance the stability of halide perovskite nanocrystals specifically in polar solvents, such as ethanol and 2-propanol, without the need for intricate synthesis procedures.

**BACKGROUND ART**

Perovskite nanocrystals have emerged as highly promising candidates in the domain of optoelectronic applications, notably in the development of light-emitting diodes (LEDs). Their appeal lies in a set of remarkable attributes, encompassing a high quantum yield, the ability to fine-tune emission wavelength through composition and size adjustments during synthesis, and a narrow emission bandwidth [L. Protesescu, S. Yakunin, M. I. Bodnarchuk, F. Krieg, R. Caputo, C. H. Hendon, R. X. Yang, A. Walsh, M. V. Kovalenko. Nanocrystals of Cesium Lead Halide Perovskites (CsPbX3, X = Cl, Br, and I): Novel Optoelectronic Materials Showing Bright Emission with Wide Color Gamut. Nano Lett. 2015, 15, 3692-3696]. While these qualities position perovskite nanocrystals as frontrunners in technological advancements, their susceptibility to instability in the presence of polar solvents presents a significant obstacle to their widespread application. This instability is rooted in their highly ionic bonding and low formation energy [K. K. Chan, D. Giovanni, H. He, T. C. Sum, K.-T. Yong. Water-Stable All-Inorganic Perovskite Nanocrystals with Non-linear Optical Properties for Targeted Multiphoton Bioimaging. ACS Appl. NanoMater. 2021. 4, 9022-9033].

Furthermore, existing procedures for broadening the applications of perovskites in imaging, sensing, and other fields often demand an extended preparation period or require numerous encapsulation stages using various materials [S. K. Avugadda, A. Castelli, B. Dhanabalan, T. Fernandez, N. Silvestri, C. Collantes, D. Baranov, M. Imran, L. Manna, T. Pellegrino, M. P. Arciniegas. Highly Emitting Perovskite Nanocrystals with 2-Year Stability in Water through an Automated Polymer Encapsulation for Bioimaging. ACSNano2022,16,13657-13666].

These cases involve the encapsulation of perovskite nanocrystals within polymeric or inorganic matrices, such as polymers [Y. Zhang, Y. Zhao, D. Wu, J. Xue, Y. Qiu, M. Liao, Q. Pei, M. S. Goorsky, X. He, Homogeneous Freestanding Luminescent Perovskite Organogel with Superior Water Stability. Adv. Mater.

2019, 31, 1902928], glasses, silicon oxides and titanium oxides. Such encapsulation effectively protects the perovskite but does not allow for tight control of the diameter size of the material. Alternatively, surface passivation of nanocrystals with ligands has been studied, especially in the field of biotechnology. Nevertheless, due to the need for biocompatible and stable structures in aqueous media, these are often multistep techniques that involve surface functionalization with multiple encapsulations and various materials. Molecules such as the amphiphilic hexadecyltrimethylammonium bromide (CTAB) have been used during synthesis mainly to passivate defects on the surface of the material and to enhance its luminescence. However, to improve stability in polar environments, it is combined with other materials such as encapsulation in a polystyrene polymeric matrix and its use as a ligand for surface passivation [Nirav Vajubhai Ghinaiya, Tae Jung Park, Suresh Kumar Kailasa, Synthesis of bright blue fluorescence and water-dispersible cesium lead halide perovskite quantum dots for the elective detection of pendimethalin pesticide, Journal of Photochemistry and Photobiology A: Chemistry, Volume 444, 2023, 114980].

Therefore, there is a problem in the state of the art for materials with perovskite structure in nanometric sizes or perovskite nanocrystals to be stabilized in polar media, as the ionic nature of perovskites plus the highly dynamic and weak bonds with the ligands, result in their dissolution in polar media. This makes their stability as colloids or in the moisture-containing atmosphere unfeasible.

**SUMMARY OF THE INVENTION**

The present invention discloses a novel method for obtaining a halide perovskite nanocrystal (NC) stabilized in an organic polar media.

A first aspect of the present invention related to a method for obtaining a stabilized in a polar media halide perovskite nanocrystal characterized in that it comprises the following steps:

> a) preparing a solution of isopropanol with CTAB with a concentration between 1 mM and 10 mM;
> b) adding a halide perovskite nanocrystal solution in a non-polar solvent on the solution obtained in step (a), wherein the perovskite has a general formula of $ABX_3$ wherein A and B are cations, and X is Cl, Br, I or any combination thereof, with a nanometric morphology with a diameter between 2 nm and 140 nm, preferably between 10 nm and 40 nm, as determined by direct measurement in Transmission Electron Microscopy (TEM);
> c) centrifuging the mixture obtained in step (b) at a speed of at least 300 g, preferably between 300 g and 800 g for a time between 3 and 6 min;
> d) removing the supernatant of the centrifugated mixture obtained in step (c);

e) redispersing the centrifugated mixture without remanent obtained in step (d) in an organic polar solvent, preferably selected from isopropanol and ethanol, acetic acid, dimethylsulfoxide (DMSO) and any combination thereof, more preferably isopropanol.

Said method allows for the functionalization of the surface of halide perovskite nanocrystals by encapsulating them within micelles using an amphiphilic molecule hexadecyltrimethylammonium bromide (CTAB) as a surfactant. The hydrophilic end of CTAB is exposed on the surface of the halide perovskites, imparting a more hydrophilic character. Existing procedures often require prolonged preparation times and multiple encapsulation stages with various materials, which may also involve a physical distance of few nanometers with the environment. This method allows for the straightforward preparation of perovskite nanocrystals in an organic polar solvent, where they can be synthesized using any desired method as this is a post-synthesis protocol. The nanocrystals are then functionalized using only one material, CTAB, which achieves relatively long-term stability: two weeks in ethanol and one month in isopropanol. Furthermore, the presence of bromide ions may help fill defects, thereby improving luminescent properties, as has been observed in some cases where this material has been used to enhance the properties of perovskites.

The term "halide perovskite nanocrystal" refers to perovskites with crystals size or diameter size reduced to the nanoscale (below 100 nm), which exhibit size-dependent optical and electronic properties, including quantum-confinement effects for sufficiently small sizes (depending on the exact material, typically below 15 nm). Over the years, various methods have been developed to synthesize perovskite nanocrystals, mainly classified into "bottom-up" or "top-down" approaches depending on the growth process. Among these strategies, the hot injection method, as described by Protesescu et al., has been one of the most frequently used methods for synthesizing perovskite nanocrystals. This method can produce monodisperse nanocubes with sizes ranging from 4 to 20 nm through precise temperature control. While this approach has successfully synthesized small nanocubes, controlling the size of CsPbXa nanocubes above 20 nm remains challenging. The CsPbBr$_3$ nanocrystals are between 5-20 nm. Alternatively, also reported stable and bright green-emissive FAPbBr$_3$ nanocubes using the hot injection method, with tunable sizes from 5 nm to 50 nm. Thus, size control of nanocrystals depends on the synthesis method and composition. Size measurements of these nanocrystals can be performed using techniques such as Transmission Electron Microscopy (TEM), Scanning Electron Microscopy (SEM), or Atomic Force Microscopy (AFM), which provide statistical values for nanocrystal sizes. The polydispersity index (PDI) quantifies the distribution of particle sizes within a sample. It is calculated as the square of the ratio of the standard deviation of the diameter distribution to its mean value squared. A suspension with a PDI of less than 0.2 is considered monodisperse, indicating high homogeneity. Additionally, Dynamic Light Scattering (DLS) can be used to measure the general size of the nanocrystals, although it is more suitable for samples with spherical morphology.

The term "diameter or diameter size" refers herein to the diameter of the smallest sphere into which a nanocrystal or nanoparticle fits or a projection thereof onto the circumference of the projection of such a sphere in the case where the measurement is performed in 2 dimensions, for example in images obtained by transmission electron microscopy, where the measurement is performed directly using this definition of diameter.

The term "speed or centrifugation speed" herein refers to centrifuges measured as Relative Centrifugal Force (RCF). Centrifuges are typically with their speed settings as revolutions per minute (rpm), however many experimental procedures have precise centrifugation conditions specified in terms of relative centrifugal force expressed in unites of gravity (times gravity or x g). The following formula is for the conversion between Relative Centrifugal Force (RCF) and RPM:

$$g = (1.118 \times 10^{-5}) \times R \times S^2$$

Where g is the relative centrifugal force, R is the radius of the rotor in centimeters and S is the speed of the centrifuge in revolutions per minute (RPM).

Thus, a preferred embodiment of the method of the present invention the A cation of the perovskite is selected from methylammonium (MA), formamidinium (FA), caesium (Cs) and any combination thereof.

In another preferred embodiment the B cation of the perovskite is selected from lead (Pb), tin (Sn), potassium (K), germanium (Ge) and any combination thereof.

In another preferred embodiment the A cation is Cs and B cation is Pb and X anion is Br, Cl or I. More preferably the X anion is Br. The bromine anion is more stable. The substitution of chlorine and iodine, or mixtures by Br allows to control the bandgap of the material, since Br atoms fill defects, and the properties of perovskites can be improved.

In another preferred embodiment the apolar solvent is selected from hexane, benzene, toluene, 1,4-dioxane, chloroform, diethyl ether, dichloromethane.

In another preferred embodiment the centrifugation speed is at least 300 g, preferably between 300 g and 800 g.

In another preferred embodiment the supernatant is removed using a method selected from centrifugation, decantation, pipetting and filtration.

In another preferred embodiment of the method a further step comprising the mixture of the redispersed product obtained in the step (e) with plasmonic metal nanoparticles, preferably the plasmonic metal nanoparticles have a spherical morphology, wherein the metal is selected from silver, copper, aluminum and gold. In a more preferred embodiment, the spherical plasmonic metal nanoparticle has a passivation in its surface, preferably the passivation is a functionalization by covalent bond between surface of the metallic nanoparticle and thiolated polyethylene glycol (PEG-SH).

The term "plasmonic nanoparticle" herein refers to a particle in the nanometric scale, typically metallic (such as gold, silver, or copper), that exhibits unique optical properties due to localized surface plasmon resonance (LSPR). When light interacts with these nanoparticles, free electrons on their surface oscillate collectively, creating strong and localized electromagnetic fields. In the present invention the synthesis of spherical silver nanoparticles is based on the Turkevich method, a kinetically controlled seed growth approach through the reduction of silver nitrate with two reducing agents: sodium citrate and tannic acid. The seed size can be controlled by adjusting reaction parameters such as temperature, pH, or, as in this case, the amount of tannic acid used.

The method of the present invention has been developed to mix these materials (perovskite nanocrystal and spherical plasmonic nanoparticles) overcoming polarity differences.

A second aspect of the present invention is a stabilized in a polar medium halide perovskite nanocrystal characterized in that it comprises a halide perovskite nanocrystal with general formula $ABX_3$ wherein A and B are cations, and X is Cl, Br, I or any combination thereof, with a diameter size of between 2 nm and 140 nm, preferably between 10 nm and 40 nm, encapsulated in a CTAB micelle, preferably with a wall thickness between 1,5 nm and 2 nm, dispersed in a polar solvent selected from isopropanol and ethanol, preferably isopropanol, and wherein the weight% of perovskite in relation to the CTAB is between 5% and 15%. This product allows the possibility to base subsequent treatments on solvents other than non-polar solvents (such as hexane or toluene). This can be an advantage for surface coatings, for example, as well as for mixing with other materials not resistant to non-polar media (not only nanoparticles, but also, for example, organic dyes, to have two fluorophores mixed). There are also chemical processes that may require this type of dissolution. The halide perovskite nanocrystals with hexadecyltrimethylammonium bromide (CTAB), achieving relatively long-term stability of two weeks in ethanol and one month in isopropanol.

The term "wall thickness" herein refers to the size of the micellar wall and such wall measurement is performed by negative staining in TEM and subsequent direct measurement on the observed contrast.

A preferred embodiment of the stabilized in a polar medium perovskite nanocrystal of the present invention the A cation of the perovskite is selected from methylammonium (MA), formamidinium (FA), caesium (Cs) and any combination thereof.

In another preferred embodiment the B cation of the perovskite is selected from lead (Pb), tin (Sn), potassium (K), germanium (Ge) and any combination thereof.

In another preferred embodiment the A cation is Cs and B cation is Pb and X anion is Br.

In another preferred embodiment the perovskite nanocrystal further comprises plasmonic metal nanoparticles homogeneously dispersed within the perovskite, wherein the metal is selected from silver, copper, aluminum and gold and preferably metal nanoparticle has a passivation in its surface, preferably the passivation is a functionalization by covalent bond between surface of the metallic nanoparticle and thiolated polyethylene glycol (PEG-SH).

The use of plasmonic nanoparticles has been proven to boost luminescence by using localized fields that improve radiative recombination and control spectral and angular features.

In a third aspect of the present invention is the use of the stabilized in a polar medium halide perovskite nanocrystal described above or the stabilized in a polar medium halide perovskite nanocrystal with plasmonic nanoparticles described above as main active layer in optoelectronic devices, preferably use in next-generation light-emitting devices for luminaires, displays, lasers, solar cells, photodetectors, light-emitting diodes (LEDs), optical sensors, and advanced photonic applications such as integrated photonic circuits, optical communication systems, and light-based computing technologies.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings and sequence listing are provided by way of illustration and are not intended to be limiting of the present invention.

**BRIEF DESCRIPTION OF THE DRAWINGS**

**Fig. 1.** Morphological characterization and homogeneity of as-synthesized $CsPbBr_3$ perovskite nanocrystals by TEM.

**Fig. 2.** Stability of $CsPbBr_3$ perovskites over time in polar organic solvents (isopropanol and ethanol) and hexane.

**Fig. 3.** TEM image showcasing perovskite nanocrystal solution blended with silver nanoparticles coexisting and extinction spectrum of the mixture of perovskite nanocrystal solution blended with silver nanoparticles. Note that TEM images show dried samples, thus the spatial distribution of the materials is not representative of the colloidal distribution. The images, though, show that all materials coexist.

**Examples**

**Example 1. Synthesis of perovskite nanocrystal**

The synthesis of monodisperse $CsPbBr_3$ nanocrystals is based on the hot injection method proposed by L. Protesescu *et al.*

To begin, the necessary precursors, such as cesium oleate, are prepared. This is achieved by mixing 0.814 g of $Cs_2CO_3$ with 40 mL of octadecene (ODE) and 2.5 mL of oleic acid (OA) in a 100 mL three-neck round-bottom flask. The mixture is degassed at 120 °C for an hour to remove unwanted molecules, and then heated to 150 °C under a nitrogen atmosphere to complete the reaction of the reagents. This solution synthesis system consists of a three-neck round-bottom reaction flask, stirred with a magnetic stirrer, and heated with a heating mantle. One of the openings is connected to a vacuum system, another is used for argon input, and the last one is used for the injection of compounds, along with a thermocouple.

The reaction is initiated by adding 0.069 g of $PbBr_2$ to 5 mL of a high boiling solvent (ODE) in a 25 mL flask. The temperature is raised to 120 °C, and vacuum is applied for an hour to remove unwanted molecules such as water or oxygen. Argon is introduced to create an inert atmosphere and prevent oxidation. Subsequently, 1 mL of a degassed mixture of OA and oleylamine (OLA) in a 1:1 ratio is added to solubilize the $PbBr_2$ salt and colloidally stabilize the nanocrystals. Once the salt is dissolved, the temperature is adjusted between 140-200 °C depending on the desired nanocrystal size, and 0.4mL of cesium oleate, preheated in an oven, is injected to induce controlled arrested precipitation of $Cs^+$, $Pb^{2+}$, and $Br^-$ ions into $CsPbBr_3$ NCs. Due to the rapid kinetics of this ionic metathesis reaction, the process must be stopped by cooling the solution rapidly (approximately ten seconds) to decouple the nucleation and growth processes. Finally, the solution is centrifuged at 2000 g for half an hour and redispersed in 40 mL of hexane after a long sonication process.

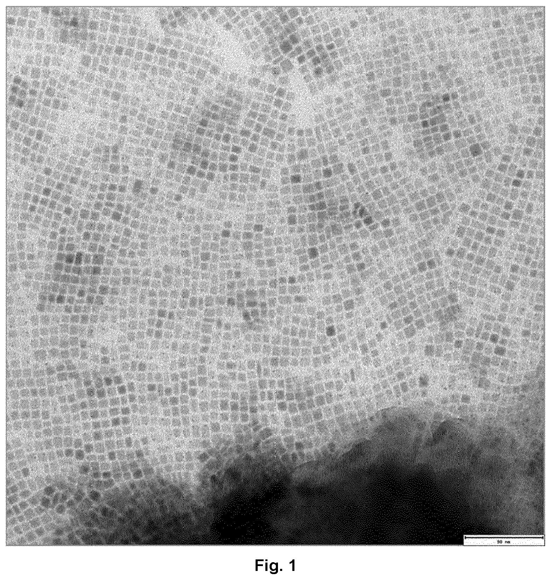

$CsPbBr_3$ nanocrystals obtained are analyzed using Transmission Electron Microscopy (TEM). TEM images in Figure 1 reveal that these nanocrystals exhibit a cubic nanoplatelet shape with a highly uniform diagonal size of $(13\pm1)$ nm.

The polydispersity index (PDI) is a measure used to quantify the distribution of particle sizes within a sample. It is calculated as the square of the ratio of the standard deviation of the diameter distribution to its mean value squared. In this case, PDI=0.08, indicating a high level of homogeneity within the sample, as the suspension exhibits a polydispersity of less than 0.2.

**Example 2. Stabilization of perovskite nanocrystals obtained in example 1 in polar media.**

The method involves preparing a solution of 5mL of isopropanol with 10mM CTAB, exceeding the critical micelle concentration (CMC) necessary to form a micelle. Then, 3mL of the perovskite solution (1.2 mM $CsPbBr_3$) in hexane obtained in example 1 is added. Subsequently, the mixture is centrifuged at 500g for 5 minutes to remove excess hexane and CTAB. Finally, it is redispersed in the desired solvent, either isopropanol or ethanol. Due to water's very high polarity, close to unity, dispersion in this medium has not been achieved with this protocol.

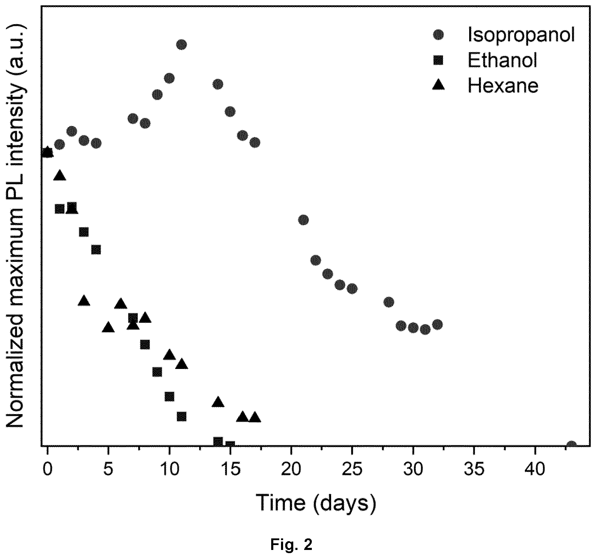

Once the perovskite nanocrystals have been synthesized in a hexane solution, it is necessary to follow the previously described protocol in page 8 for solvent exchange to a more polar one to facilitate their mixing with silver nanoparticles. For this purpose, two different organic solvents were used: isopropanol and ethanol. Due to the high polarity of water, close to unity, it was not a feasible option. A study was conducted to assess the stability of the material in these solvents by measuring photoluminescence over time. The results, shown in Figure 2, indicate that the nanocrystals exhibit stability for approximately one month in isopropanol, whereas in ethanol, stability is maintained for around two weeks, comparable with that obtained in the original non-polar solvent. This difference is attributed to the higher polarity of ethanol compared to isopropanol. Due to the relatively long-lasting stability of perovskites in polar organic solvents achieved through CTAB encapsulation, it becomes feasible to mix them with plasmonic nanoparticles in a solvent where both materials remain intact. In this scenario, isopropanol has been chosen due to its better compatibility with perovskites.

**Example 3. Mixing perovskite nanocrystals in polar media of example 2 and spherical plasmonic silver nanoparticles.**

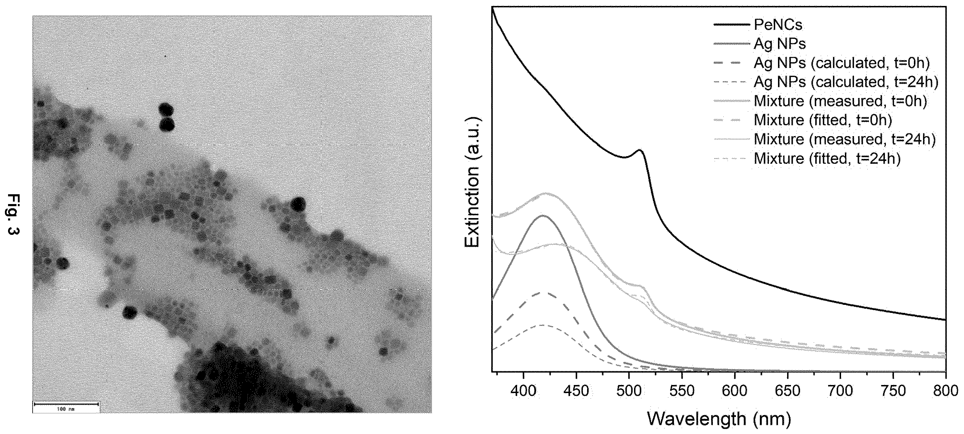

Successful mixing of the nanocrystals and silver nanoparticles was confirmed by the presence of both the perovskite absorption band and the silver plasmon peak in the extinction spectrum of the mixture. Solutions prepared as previously explained were used. The concentrations of each component were randomly chosen to obtain 2 mL of mix solution in which the extinction signatures of both nanoparticles are easily identifiable in the spectra, indicating their coexistence, but any other volume is also possible. In this case, the volume ratio for each material is 1:1, with 1 mL of each being added. TEM imaging further corroborated the coexistence of both materials (Fig 3). To address silver degradation issues, silver nanoparticles were protected with PEG-SH molecules, resulting in a 6nm reduction in the plasmonic peak redshift when transferred to different solvents. This is an unavoidable shift due to refractive index changes. This demonstrates the effectiveness of PEG-SH in stabilizing silver nanoparticles in mixed systems.

Figure 3 illustrates the extinction spectrum of the two reference materials: perovskite nanocrystals functionalized with CTAB (green continuous line) and silver nanoparticles (red continuous line). Additionally, the measured extinction spectrum of a solution containing a mixture of perovskite nanocrystals and Ag nanoparticles is shown in a blue continuous line.

To assess the stability of this mixture, the reference curves for perovskite nanocrystals and Ag nanoparticles have been convoluted, conveniently weighted to account for their concentration in the final mix, to simulate its experimental extinction spectrum, indicated by a blue dashed line. The results reveal that the calculated plasmon curve (represented by a red dashed line), adjusted to align with the overall trend of the mixture, exhibits a fast 10nm redshift due to solvent exchange. While a change in the refractive index of the medium can cause some peak shift, this effect could not account for the full 10nm, indicating that the silver particles could be slightly degraded. This shift is controlled functionalizing with PEG-SH, as mentioned above.

In this figure 3, a CTAB layer is observed on top of the material due to the addition of a CTAB concentration significantly exceeding the critical micelle concentration (CMC). Consequently, some molecules may not adhere to the perovskite surface, but stay in solution, forming a visible layer when deposited. Excess CTAB can be removed through centrifugation.

**Claims**

1. A method for obtaining a stabilized in a polar media halide perovskite **characterized in that** it comprises the following steps:

    a) preparing a solution of isopropanol with CTAB with a concentration of between 1 mM and 10 mM;
    b) adding a halide perovskite nanocrystal solution in a non-polar solvent on the solution obtained in step (a), wherein the perovskite has a general formula of $ABX_3$ wherein A and B are cations and X is Cl, Br, I or any combination thereof, with a nanometric morphology with a diameter ranging between 2 nm and 140 nm, preferably between 10 nm and 40 nm, as determined by direct measurement in Transmission Electron Microscopy (TEM);
    c) centrifuging the mixture obtained in step (b) at a speed of at least 300 g, preferably between 300 g and 800 g, for a time of between 3 and 6 min;
    d) removing the supernatant of the centrifugated mixture obtained in step (c);
    a) redispersing the centrifugated mixture without remanent obtained in step (d) in an organic polar solvent, preferably selected from isopropanol and ethanol, acetic acid, dimethylsulfoxide (DMSO) and any combination thereof, more preferably isopropanol.

2. Method according to claim 1, wherein the A cation of the perovskite is selected from methylammonium (MA), formamidinium (FA), caesium (Cs) and any combination thereof.

3. Method according to any claims 1 or 2, wherein the B cation of the perovskite is selected from lead (Pb), tin (Sn), potassium (K), germanium (Ge) and any combination thereof.

4. Method according to any claims 1 to 3, wherein the A cation is Cs and B cation is Pb and X anion is Br, Cl or I, more preferably X anion is Br.

5. Method according to any claims 1 to 4, wherein the apolar solvent is selected from hexane, benzene, toluene, 1,4-dioxane, chloroform, diethyl ether, dichloromethane.

6. Method according to any claims 1 to 5, wherein the centrifugation speed is at least 300 g, preferably between 300 g and 800 g

7. Method according to any claims 1 to 6, wherein the supernatant is removed using a method selected from decantation, pipetting and filtration.

8. Method according to any claims 1 to 7, wherein further comprises a step of mixing the redispersed mixture obtained in the step (e) with plasmonic metal nanoparticles, wherein the metal is selected from silver, copper, aluminum and gold.

9. Method according to claim 8, wherein the spherical plasmonic metal nanoparticle has a passivation in its surface, preferably the passivation is a functionalization by covalent bond between surface of the metallic nanoparticle and thiolated polyethylene glycol (PEG-S-).

10. A stabilized in a polar medium perovskite **characterized in that** it comprises a perovskite nanocrystal with general formula $ABX_3$ wherein A and B are cations, and X is Cl, Br, I or any combination thereof, with a diameter size of between 2 nm and 140 nm, preferably between 10 nm and 40 nm, encapsulated in a CTAB micelle more preferably 1,5 nm and 2 nm thick dispersed in a polar solvent selected from isopropanol and ethanol, and wherein the weight% of perovskite in relation to the CTAB is between 5% and 15%.

11. The perovskite according to claim 10, wherein the B cation of the perovskite is selected from lead (Pb), tin (Sn), potassium (K), germanium (Ge) and any combination thereof.

12. The perovskite according to any of claims 10 to 11; wherein the A cation of the perovskite is selected from methylammonium (MA), formamidinium (FA), caesium (Cs) and any combination thereof

13. The perovskite according to any of claims 10 to 12, wherein the A cation is Cs and B cation is Pb and X anion is Br.

14. The perovskite according to any of claims 10 to 13, wherein the perovskite nanocrystal further comprises plasmonic metal nanoparticles homogeneously dispersed within the perovskite, wherein the metal is selected from silver, copper, aluminum, wherein the metal is selected from silver and gold and preferably metal nanoparticle has a passivation in its surface, preferably the passivation is a functionalization by covalent bond between surface of the metallic nanoparticle and thiolated polyethylene glycol (PEG-S-).

15. Use of the stabilized in a polar medium perovskite according to any of claims 10 to 13 or stabilized in a polar medium perovskite with plasmonic nanoparticles according to claim 14 as main active layer in optoelectronic devices, preferably next-generation light-emitting devices for luminaires, displays, lasers, solar cells, photodetectors, light-emitting diodes (LEDs), optical sensors, and advanced photonic applications such as integrated photonic circuits, optical communication systems, and light-based computing technologies.

Fig. 1

EP 4 686 745 A1

Fig. 2

9

Fig. 3

## EUROPEAN SEARCH REPORT

**Application Number**

EP 24 38 2839

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRIYANKAMONI ET AL: "CsPbBr3 perovskites: A dual fluorescence sensor to distinguish ethanol from methanol - ScienceDirect", SPECTROCHIMICA ACTA PART A: MOLECULAR AND BIOMOLECULAR SPECTROSCOPY, vol. 291, 1 April 2023 (2023-04-01), page 122309, XP093230185, AMSTERDAM, NL ISSN: 1386-1425, DOI: 10.1016/j.saa.2022.122309 Retrieved from the Internet: URL:https://www.sciencedirect.com/science/article/pii/S1386142522014573?via=ihub> | 10-13,15 | INV. C09K11/02 C09K11/66 |
| Y | * abstract; sections 2-3 * | 10-13,15 | |
| A | | 1-9,14 | |
| Y | CN 113 462 387 A (UNIV QILU TECHNOLOGY) 1 October 2021 (2021-10-01) | 10-13,15 | |
| A | * claims 1-10; examples 1-7 * | 1-9,14 | |

TECHNICAL FIELDS SEARCHED (IPC)

C09K

The present search report has been drawn up for all claims

| Place of search | Date of completion of the search | Examiner |
|---|---|---|
| The Hague | 3 December 2024 | Mehdaoui, Imed |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2839

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | Publication date | Patent family member(s) | Publication date |
|---|---|---|---|
| CN 113462387 A | 01-10-2021 | NONE | |

EPO FORM P0459

For more details about this annex : see Official Journal of the European Patent Office, No. 12/82

EP 4 686 745 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. PROTESESCU ; S. YAKUNIN ; M. I. BODNARCH-UK ; F. KRIEG ; R. CAPUTO ; C. H. HENDON ; R. X. YANG ; A. WALSH ; M. V. KOVALENKO**. Nanocrystals of Cesium Lead Halide Perovskites (CsPbX3, X = Cl, Br, and I): Novel Optoelectronic Materials Showing Bright Emission with Wide Color Gamut. *Nano Lett.*, 2015, vol. 15, 3692-3696
- **K. K. CHAN ; D. GIOVANNI ; H. HE ; T. C. SUM ; K.-T. YONG**. Water-Stable All-Inorganic Perovskite Nanocrystals with Non-linear Optical Properties for Targeted Multiphoton Bioimaging. *ACS Appl. NanoMater.*, 2021, vol. 4, 9022-9033
- **S. K. AVUGADDA ; A. CASTELLI ; B. DHANABALAN ; T. FERNANDEZ ; N. SILVESTRI ; C. COLLANTES ; D. BARANOV ; M. IMRAN ; L. MANNA ; T. PELLEGRINO**. Highly Emitting Perovskite Nanocrystals with 2-Year Stability in Water through an Automated Polymer Encapsulation for Bioimaging. *ACSNano*, 2022, vol. 16, 13657-13666
- **Y. ZHANG ; Y. ZHAO ; D. WU ; J. XUE ; Y. QIU ; M. LIAO ; Q. PEI ; M. S. GOORSKY ; X. HE**. Homogeneous Freestanding Luminescent Perovskite Organogel with Superior Water Stability. *Adv. Mater.*, 2019, vol. 31, 1902928
- **NIRAV VAJUBHAI GHINAIYA ; TAE JUNG PARK ; SURESH KUMAR KAILASA**. Synthesis of bright blue fluorescence and water-dispersible cesium lead halide perovskite quantum dots for the elective detection of pendimethalin pesticide. *Journal of Photochemistry and Photobiology A: Chemistry*, 2023, vol. 444, 114980